Europäisches Patentamt

European Patent Office

Office européen des brevets

(11) Veröffentlichungsnummer: **0 288 654 B1**

# (12) EUROPÄISCHE PATENTSCHRIFT

(45) Veröffentlichungstag der Patentschrift: **04.12.91**

(51) Int. Cl.⁵: **B60G 3/18**

(21) Anmeldenummer: **88100017.8**

(22) Anmeldetag: **04.01.88**

(54) **Radaufhängung für die angetriebenen Hinterräder von Kraftfahrzeugen.**

(30) Priorität: **28.04.87 DE 3714034**

(43) Veröffentlichungstag der Anmeldung:
**02.11.88 Patentblatt 88/44**

(45) Bekanntmachung des Hinweises auf die
Patenterteilung:
**04.12.91 Patentblatt 91/49**

(84) Benannte Vertragsstaaten:
**DE ES FR GB IT SE**

(56) Entgegenhaltungen:
EP-A- 0 199 915     DE-A- 1 938 850
DE-A- 2 158 931     DE-A- 2 355 954
DE-A- 2 416 616     DE-A- 3 331 282

PATENT ABSTRACTS OF JAPAN, Band 9, Nr.
67 (M-366)[1790], 27. März 1985; & JP-A-59
199 312 (FUJI JUKOGYO K.K.) 12-11-1984

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Matschinsky, Wolfgang
Georgenschwaigstrasse 18
W-8000 München 40(DE)**

(74) Vertreter: **Dexheimer, Rolf
Bayerische Motoren Werke Aktiengesellschaft Postfach 40 02 40 Petuelring 130 -
AJ-31
W-8000 München 40(DE)**

## Beschreibung

Die Erfindung bezieht sich auf eine Radaufhängung nach dem Oberbegriff des Patentanspruchs 1.

Eine bekannte derartige Radaufhängung (DE-A-25 43 189) weist einen unteren Querlenker auf, der um eine Fahrzeugquerachse verwindungssteif ausgebildet ist, sowie einen oberen einfachen stabförigen Querlenker. Von dem Radträger infolge von Brems- oder Anfahrkräften auf die Radaufhängung ausgeübte Momente um eine Querachse werden allein von dem unteren Querlenker aufgenommen, da der obere Stablenker hierzu nichts beitragen kann. Der untere Querlenker ist mit dem Radträger über zwei in Draufsicht hintereinanderliegende Lager verbunden, von denen das vordere radial weicher sein soll als die hintere. Auf diese Weise soll im Rahmen der Elastizität der radträgerseitigen Lager des unteren Querlenkers das Rad unter dem Einfluß von Seitenkräften eine Vorspurzunahme erfahren. Die durch die beiden radträgerseitigen Lager des unteren Querlenkers definierte Schwenkachse zwischen diesem Querlenker und dem Radträger und die aufbauseitige Schwenkachse des Querlenkers schneiden sich in Draufsicht in einem Punkt, der vor der Radachse liegt. Das bedeutet, daß auch der Anfahrt- und Bremsnickpol vor der Achse liegt, was an sich erwünscht ist. Ein Nachteil dieser Achse liegt jedoch darin, daß das einfedernde Rad sehr deutlich in Richtung Nachspur verstellt wird, was ein stark übersteuerndes Fahrverhalten in Kurven mit sich bringt.

Eine andere vorbekannte Achse etwa dieser Bauart (Automobiltechnische Zeitschrift 79 (1977) 6, Seite 220) hat in Draufsicht daher den Schnittpunkt der radträgerseitigen Schwenkachse des unteren Querlenkers mit der aufbauseitigen Schwenkachse dieses Querlenkers weit hinter der Radachse. Die Verstellung des Rades beim Ein- und Ausfedern in Richtung Nachspur wird dadurch vermieden. Dies führt aber wiederum dazu, daß mit einer derartigen Radaufhängung zwar ein guter Anfahrnickausgleich, auf der anderen Seite aber nur ein verhältnismäßig geringer Bremsnickausgleich möglich ist.

Es ist ferner bekannt (EP-A-0 199 915), bei einer Doppelquerlenkerachse den oberen Querlenker in zwei Lenkerarme aufzulösen, die gelenkig sowohl mit dem Radträger als auch mit dem Fahrzeugaufbau verbunden sind. Ähnlich ist auch der untere Querlenker in zwei Einzellenker aufgelöst. Beide Lenkerpaare sind so in Draufsicht gepfeilt, daß eine ideelle Drehachse entsteht, die die Fahrbahnebene hinter der Raddrehachse und außerhalb der Spurweite schneidet. Durch eine gezielte elastokinematische Verstellbarkeit der unteren beiden Lenkerarme soll sich sowohl bei Seitenkräften als auch bei Bremskräften sowie bei Anfahrkräften eine erwünschte Radstellungsänderung ergeben. Die beiden oberen einzelnen Lenkerarme sind gleich lang und in Draufsicht symmetrisch zur Raddrehachse. Sie bewirken daher allein aufgrund der Einfederungsbewegung des Rades keine Vorspuränderung.

Der Erfindung liegt die Aufgabe zugrunde, eine Radaufhängung der vorausgesetzten Bauart zu schaffen, die nicht nur einen guten Anfahrnickausgleich, sondern auch einen guten Bremsnickausgleich und weiterhin eine gezielte Beeinflussung der Vorspurkurve beim Ein- und Ausfedern ermöglicht.

Diese Aufgabe wird bei einer Radaufhängung nach dem Oberbegriff des Patentanspruchs 1 durch die in dessen kennzeichnendem Teil angegebenen Merkmale gelöst. Der vor der Radachse liegende Schnittpunkt der radträgerseitigen und der aufbauseitigen Schwenkachse des verwindungssteifen Querlenkers ermöglicht es, den Pol der Radaufhängung so zu wählen, daß sowohl für die Bremskraft als auch für die Antriebskraft eine schräg nach vorne oben ansteigende Wirkungslinie gegeben ist, so daß nicht nur ein guter Anfahrnickausgleich, sondern auch ein guter Bremsnickausgleich erreichbar sind. Darüber hinaus kann aber durch die in vertikalem Abstand von dem verwindungssteifen Querlenker und hintereinander sowie querverlaufend angeordneten Stützlenker dem Radträger bei der Ein- oder Ausfederungsbewegung eine so starke Lenkbewegung um eine Hochachse aufgezwungen werden, daß im Verlauf der Federungsbewegung keine Radstellungsänderung in Richtung Nachspur, sondern unter Umständen sogar in Richtung Vorspur erfolgt. Das Fahrzeug erhält damit ein neutrales, ggf. sogar untersteuerndes Fahrverhalten in der Kurve.

Da die von dem Radträger auf die Radaufhängung beim Anfahren und beim Bremsen ausgeübten Momente allein von dem biege- und verwindungssteifen Querlenker aufgenommen werden, ist es einfacher, die Radaufhängung im Hinblick auf die Elastokinematik auszulegen und abzustimmen. Die Radaufhängung hat ferner einen geringen Platzbedarf in Fahrzeuglängsrichtung. Weiterhin ist eine komplette Vormontage der Achse an einem Hilfsrahmen oder an einem elastisch aufgehängten Fahrschemel oder ähnlichem möglich. Schließlich gestattet die neue Achse auch noch eine "aktive" Lenkung der Räder dieser Achse, indem einer der beiden oberen Stützlenker im wesentlichen in dessen Längsrichtung verstellt wird.

Die Erfindung ist im folgenden anhand eines in der Zeichnung dargestellten Ausführungsbeispiels näher erläutert. Es zeigen:

Fig. 1  eine perspektivische Ansicht der neuen Radaufhängung und

Fig. 2    eine Seitenansicht von innen auf den
Radträger dieser Radaufhängung.

Bei der in der Zeichnung dargestellten Radaufhängung handelt es sich um eine Einzelradaufhängung für ein angetriebenes hinteres Rad 1 eines Personenkraftwagens, das durch einen Radträger 2 gelagert ist. Bei dem dargestellten Ausführungsbeispiel ist der untere Querlenker 3 biege- und verwindungssteif ausgebildet und an dem lediglich angedeuteten Fahrzeugaufbau 4 über die Lenkerlager 5 und 6 angelenkt. Durch die Lenkerlager 5 und 6 ist die Schwenkachse 7 definiert. Der Querlenker 3 könnte - abweichend von der dargestellten Ausführungsform - auch als oberer Querlenker der Radaufhängung ausgebildet sein. Ferner könnte der biege- und verwindungssteife Querlenker auch an einem mit dem Fahrzeugaufbau zu verschraubenden Hilfsrahmen oder an einem mit diesem elastisch zu verbindenden Fahrschemel angelenkt sein. Schließlich könnten auch die einzelnen Drehachsen der Lenkerlager 5 und 6 zu der Drehachse 7 angestellt bzw. geneigt sein. Der Radträger 2 ist gegenüber dem Querlenker 3 um eine annähernd in Fahrzeuglängsrichtung verlaufende Schwenkachse 8 beweglich.

Der Schnittpunkt P der aufbauseitigen Drehachse 7 des verwindungssteifen Querlenkers 3 mit der die Schwenkachse 8 bildenden Verbindungslinie 9 der radseitigen Lager 10 und 11 des Querlenkers 3 liegt in Draufsicht vor dem Rad 1.

In vertikalem Abstand oberhalb vom verwindungssteifen Querlenker 3 sind etwa querverlaufend zwei hintereinander liegende Stützlenker 12 und 13 vorgesehen, die mit ihren äußeren Enden gelenkig am Radträger 2 und mit ihren inneren Enden gelenkig am Fahrzeugaufbau 4 bzw. einem schon erwähnten Hilfsrahmen oder Fahrschemel angelenkt sind.

Eines der radseitigen Lager 10 bzw. 11 - bei dem dargestellten Ausführungsbeispiel das Lager 11 - ist etwa in der Ebene des Querlenkers 3 nachgiebig und etwa senkrecht dazu steif mit dem Radträger 2 verbunden. Bei dem in der Zeichnung dargestellten bevorzugten Ausführungsbeispiel erfolgt dies dadurch, daß am Querlenker 3 und am Radträger 2 eine Pendelstütze 14 angelenkt ist, die zur Ebene des Querlenkers 3 zumindest annähernd senkrecht ausgerichtet ist. Auf diese Weise können von dem Querlenker 3 auf den Radträger 2 über die Pendelstütze 14 vertikale Kräfte gut übertragen werden, während eine horizontale bzw. in der Ebene des Querlenkers 3 erfolgende Relativbewegung zwischen diesem Querlenker 3 und dem Radträger ohne weiteres ermöglicht ist.

Das - bei dem dargestellten Ausführungsbeispiel hintere - Lager 10 zwischen dem Querlenker 2 und dem Radträger 2 bildet gewissermaßen ein "Festlager", das durch ein axial und radial führendes Gummilager gebildet sein kann.

Die als Gummilager ausgebildeten Lenkerlager 5 und 6 übernehmen auch die elastische "Längsfederung" der Radaufhängung, indem sie eine geringe Längsverschiebung und ggf. auch eine Schwenkung des Querlenkers 3 um eine Hochachse zulassen.

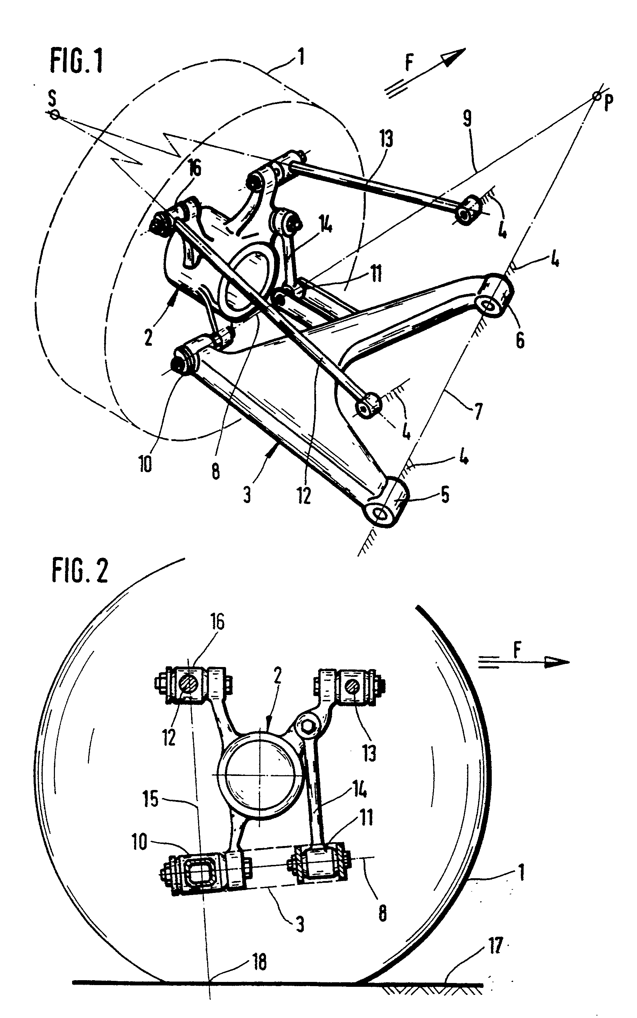

Wie aus Fig. 2 hervorgeht, durchdringt in Seitenansicht die Verbindungslinie 15 des radseitigen Festlagers 10 des Querlenkers 3 mit dem radseitigen Lager 16 des hinteren oberen Stützlenkers 12 die Fahrbahnebene 17 etwa im Angriffspunkt 18 einer auf das Rad 1 einwirkenden Seitenkraft. Dies hat zur Folge, daß Radseitenkräfte weitgehend von dem Querlenker 3 allein über das Festlager 10 und von dem Stützlenker 12 aufgenommen werden, so daß der Stützlenker 13 bei Seitenkräften wenig zusätzlich belastet wird, was ggf. die Möglichkeit vereinfacht, durch axiales Verstellen dieses Stützlenkers 13 eine aktiv lenkbare Hinterachse zu erhalten. Dei Verstellkräfte sind dabei vergleichsweise gering.

Aus Fig. 1 ist zu erkennen, daß in Draufsicht die Achsen der beiden Stützlenker 12 und 13 - wie es für Einzellenker an sich bekannt ist - einen Schnittpunkt S haben, der auf der von der Fahrzeugmitte abgewandten Seite des Rades 1 liegt. Auf diese Weise kann durch richtige Abstimmung der elastischen Anlenkungen des verwindungssteifen Querlenkers 3 (Längsfederung) und der Anlenkungen der beiden Stützlenker 12 und 13 erreicht werden, daß die elastischen Vorspuränderungen sowohl für den Lastfall Bremsen als auch für den Lastfall Antreiben kompensiert bzw. - wenn dies gewünscht wird - sogar überkompensiert werden.

Um elastisch bedingte Radstellungsänderungen zu steuern, kann es auch zweckmäßig sein, die Pendelstütze 14 gegenüber der in der Zeichnung dargestellten Lage weiter zur Fahrzeugmitte hin zu versetzen.

In der Zeichnung ist ferner die Federung der Radaufhängung nicht dargestellt. Die Feder und der Dämpfer werden zweckmäßig an dem biege- und verwindungssteifen Querlenker 3 angreifen. Um Einbauraum zu gewinnen, kann es dabei vorteilhaft sein, Feder und Dämpfer oben nach innen zu neigen. Beide können außerdem mit ihren oberen Enden an dem schon mehrfach erwähnten Hilfsrahmen oder Fahrschemel abgestützt sein, was Montageerleichterungen für die gesamte Achse mit sich bringt, die darüber hinaus schon vor ihrem Einbau in den Fahrzeugkörper hinsichtlich ihrer Vorspur- und Sturzwerte einjustiert werden kann.

**Patentansprüche**

1.  Radaufhängung für die angetriebenen Hinterräder von Kraftfahrzeugen, mit einem das Rad (1) lagernden Radträger (2), der über in vertikalem Abstand voneinander angeordnete Querlenker (3; 12, 13) mit dem Fahrzeugaufbau (4) oder einem daran zu befestigenden Hilfsrahmen verbunden ist, wobei einer der Querlenker (3) verwindungssteif ausgebildet und radseitig über zwei hintereinander liegende Lager (10, 11) mit dem Radträger (2) in Verbindung steht, von denen eines etwa in der Ebene des Querlenkers (3) nachgiebiger ist als das andere, und wobei ferner der Schnittpunkt der aufbauseitigen Drehachse (7) des verwindungssteifen Querlenkers (3) mit der Verbindungslinie (9) der radseitigen Lager (10, 11) dieses Querlenkers (3) in Draufsicht vor dem Rad (1) liegt, gekennzeichnet durch folgende Merkmale:

a) in vertikalem Abstand vom verwindungs- und biegesteifen Querlenker (3) sind etwa quer verlaufend zwei hintereinander liegende Stützlenker (12, 13) vorgesehen,
b) die in der Ebene des Querlenkers (3) nachgiebige Verbindung des Querlenkers (3) mit dem Radträger (2) ist durch eine an beiden angelenkte und zur Ebene des Querlenkers zumindest annähernd senkrechte Pendelstütze (14) gebildet.

2. Radaufhängung nach Anspruch 1, dadurch gekennzeichnet, daß der biege- und verwindungssteife Querlenker der untere Querlenker (3) ist.

3. Radaufhängung nach Anspruch 1, dadurch gekennzeichnet, daß das der Pendelsstütze (14) benachbarte zweite radseitige Lager (Festlager 10) des Querlenkers (3) in Draufsicht hinter der Pendelstütze (14) liegt.

4. Radaufhängung nach Anspruch 3, dadurch gekennzeichnet, daß in Seitenansicht die Verbindungslinie (15) des radseitigen zweiten Lagers (Festlager 10) des Querlenkers (3) mit dem radseitigen Lager (16) des hinteren Stützlenkers (12) die Fahrbahnebene (17) etwa im Angriffspunkt (18) einer auf das Rad (1) einwirkenden Seitenkraft durchdringt.

5. Radaufhängung nach Anspruch 1, dadurch gekennzeichnet, daß in Draufsicht die Achsen der beiden Stützlenker (12, 13) einen Schnittpunkt (S) auf der von der Fahrzeugmitte abgewandten Seite des Rades (1) haben.

**Claims**

1. A wheel suspension for driven rear wheels of motor vehicles, comprising a wheel support (2) which holds a wheel (1) and is connected via vertically spaced transverse links (3; 12, 13) to the vehicle body (4) or an underframe for securing thereto, one of the transverse links (3) being torsion-resistant and connected on the wheel side to the wheel support (2) by two bearings (10, 11) disposed one behind the other, one bearing being somewhat more flexible than the other in the plane of the transverse link (3), and the axis of rotation (7) of the torsion-resistant transverse link (3) intersects the line (9) connecting the wheel-side bearing (10, 11) of the transverse link (3) at a point which, in plan view, is situated in front of the wheel (1), characterised by the following features:

a) two supporting links (12, 13) disposed one behind the other and extending approximately transversely are disposed at a vertical distance from the torsion-resistant and bending-resistant transverse link (3),
b) the resilient connection in the plane of the transverse link (3) between the transverse link (3) and the wheel support (2) is formed by a pendulum bearing (14) pivoted to both and at least approximately at right angles to the plane of the transverse link.

2. A wheel suspension according to claim 1, characterised in that the bending-resistant and torsion-resistant transverse link is the bottom transverse link (3).

3. A wheel suspension according to claim 1, characterised in that the second wheel-side bearing (fixed bearing 10) of the transverse link (3) adjacent the pendulum support (14) is situated in plan view behind the pendulum support (14).

4. A wheel suspension according to claim 3, characterised in that, in side view, the line (15) joining the wheel-side second bearing (fixed bearing 10) of the transverse link (3) to the wheel-side bearing (16) of the rear supporting link (12) intersects the road plane (17) approximately at the point (18) of engagement of a lateral force acting on the wheel (1).

5. A wheel suspension according to claim 1, characterised in that, in Plan view, the axes of the two supporting links (12, 13) intersect at a point (S) on the side of the wheel (1) remote from the centre of the vehicle.

**Revendications**

1. Suspension de roue pour les roues arrière motrices de véhicules à moteur, avec un moyeu (2) supportant la roue (1) qui est relié par l'intermédiaire des bras directeur transversaux (3, 12, 13), disposés à une certaine distance verticale les uns des autres, au châssis du véhicule (4) ou à un bâti auxiliaire à fixer sur celui-ci, l'un des bras directeur transversaux (3) constitué de façon à résister à la torsion étant en liaison du côté de la roue par l'intermédiaire de deux paliers (10, 11) situés l'un derrière l'autre, avec le moyeu (2), l'un des paliers étant un peu plus flexible dans le plan du bras directeur transversal (3) que l'autre et en outre le point de recoupement de l'axe de rotation (7), situé du côté du châssis, du bras directeur transversal (7), résistant à la torsion, avec la ligne de fonction (9) des paliers situés du côté de la roue (10, 11) de ce bras directeur transversal (3) se trouvant, en vue par-dessus, en avant de la roue (1), suspension caractérisée par les points suivants :

    a) à une certaine distance verticale du bras directeur transversal (3) résistant à la torsion et à la flexion, il est prévu deux bras directeur d'appui (12, 13) situés l'un derrière l'autre et s'étendant sensiblement transversalement,

    b) la liaison flexible dans le plan du bras directeur transversal (3) de ce bras (3) avec le moyeu (2) est constitué par un support pendulaire (14) articulé sur les deux et perpendiculaire, du moins approximativement au plan du bras directeur transversal.

2. Suspension selon la revendication 1, caractérisée en ce que le bras directeur résistant à la flexion et à la tension est le bras directeur transversal inférieur (3).

3. Suspension selon la revendication 1, caractérisée en ce que le deuxième palier (le plan fixe 10) situé du côté de la roue, voisin du support pendulaire (14), du bras directeur transversal (3) se trouve, en vue par-dessus, derrière le support pendulaire (14).

4. Suspension selon la revendication 3, caractérisée en ce que, en vue latérale, la ligne de jonction (15) du deuxième palier situé du côté de la roue (le palier fixe 10) du bras directeur transversal (3) rencontre avec le palier (16) situé du côté de la roue du bras directeur arrière d'appui (12) le plan de la chaussée (17) sensiblement en un point (18) ou s'exerce sur la roue (1) une force latérale.

5. Suspension selon la revendication 1, caractérisée en ce que, en vue par-dessus, les axes des deux bras directeur d'appui (12, 13) ont un joint de recoupement (S) sur le côté de la roue (1) tourné à l'opposé du milieu du véhicule.

FIG.1

FIG. 2